# EUROPÄISCHE PATENTSCHRIFT

(11) **EP 1 978 433 B1**
(45) Veröffentlichungstag und Bekanntmachung des Hinweises auf die Patenterteilung: **04.01.2012**
(21) Anmeldenummer: 08006679.8
(22) Anmeldetag: 01.04.2008
(51) Int. Cl.: A01G 7/00, A01B 79/00, G05D 3/12, A01B 63/00, A01B 63/111, A01M 7/00

(54) **Elektronisches Überwachungs- und/oder Einstellsystem**
Electronic monitoring and/or adjustment system
Système de surveillance et/ou de réglage électronique

(30) Priorität: 07.04.2007 DE 102007016753
(43) Veröffentlichungstag der Anmeldung: 08.10.2008
(73) Patentinhaber: Amazonen-Werke H. Dreyer GmbH & Co. KG, 49205 Hasbergen (DE)
(72) Erfinder: Marquering, Johannes, Dr., 49176 Hilter (DE)

(56) Entgegenhaltungen:
- EP-A1- 1 167 095
- EP-A2- 1 296 159
- DE-A1- 4 204 481
- DE-A1- 4 206 990
- US-A- 4 961 173

## Beschreibung

Die Erfindung betrifft ein elektronisches Überwachungs- und/oder Einstellsystem gemäß des Oberbegriffes des Patentanspruches.

Ein derartiges elektronisches Überwachungs- und Einstellsystem ist beispielsweise durch die EP 1 167 095 A1 bekannt. Dieses elektronische Überwachungssystem wird für die Höhen- und/oder Lageeinstellung eines sich quer zur Fahrtrichtung erstreckenden Verteilergestänges einer Feldspritze eingesetzt. Auf jeder Seite des Verteilergestänges sind zwei beabstandet zueinander angeordnete Abstandssensoren, die beispielsweise als Ultraschallsensoren ausgebildet sind, angeordnet. Diese Sensoren messen den Abstand zu der Bestandsfläche und übermitteln über als Leitungen ausgebildete Datenübertragungseinrichtungen Signaldaten über den Abstand zur Bestandsfläche an die Signaleingänge eines elektronischen Auswerterechners. Aufgrund dieser Signaldaten wird dann ein Stellelement, welches sich zwischen dem Rahmen der Feldspritze und dem Verteilergestänge angeordnet ist, angesteuert, um die Lage des Verteilergestänges entsprechend einzustellen.

Das Problem bei diesem bekannten System besteht darin, dass jeder Sensor jeweils Daten über den von ihm gemessenen Abstand einzeln jeweils über separaten Signaleingang an den Auswerterechner übermittelt. Diese Daten werden dazu benutzt, um das Gestänge entsprechend anzusteuern. Wenn sich nun Fehlstellen innerhalb des Bestandes in dem Bereich befinden, in welchem der Sensor den Abstand zur Bestandsfläche misst, werden falsche Abstände über die sich im übrigen Bereich in gleichmäßiger Weise befindliche Bestandsfläche geliefert. Hierdurch übermittelt der jeweilige Sensor an sich falsche Abstände an den Auswerterechner und das Verteilergestänge wird falsch eingestellt.

Der Erfindung liegt die Aufgabe zugrunde, mit einfachen Maßnahmen sicher zu stellen, dass nach Möglichkeit vermieden wird, dass falsche Abstandssignaldaten an den Auswerterechner übermittelt werden.

Diese Aufgabe wird erfindungsgemäß dadurch gelöst, dass jedem Signaleingang zumindest zwei Sensoren, die Signaldaten an den Auswerterechner übermitteln, auf einer Seite des Verteilergestänges angeordnet sind, dass der Auswerterechner Filtermittel aufweist, so dass nur die Signaldaten kürzester Laufzeit der an einem Signaleingang angeschlossenen Sensoren für die Auswertung zur Ermittlung des Abstandes zur Bestandsfläche berücksichtigt werden.

Infolge dieser Maßnahmen sind jedem Signaleingang des Auswerterechners zwei beabstandet zueinander angeordnete Sensoren, die auf einer Seite des Verteilergestänges angeordnet sind, zugeordnet. Hierbei wird davon ausgegangen, dass die beiden Sensoren soweit beabstandet zueinander angeordnet sind, dass die Fahlstellen jeweils nur im Bereich eines Sensors auftreten. Hierbei ist die Auswerteroutine und/oder das Auswerteprogramm so ausgelegt, dass für den Auswerterechner die an einem Signaleingang angeschlossenen Sensoren als eine Signallinie gewertet wird. Von einer Signallinie gehen jeweils nur die Signale kürzester Laufzeit in die Auswertung durch das in der Auswerteroutine und/oder Auswerteprogramm enthaltene Filtermittel ein. Somit wird sicher gestellt, dass das Verteilergestänge in dem vorgesehenen Abstand zu der Bestandsfläche gehalten wird.

In einfacher Weise lässt sich nur die Auswertung der Signaldaten kürzester Laufzeit, die von zwei an einem Signaleingang angeschlossenen Sensoren übermittelt werden, dadurch erreichen, dass die an einem Signaleingang angeschlossenen Sensoren ebenfalls an einem Signalausgang des elektronischen Auswerterechners angeschlossen sind.

Um in einfacher Weise die Auswertung der Signale kürzester Laufzeit von zwei an einem Signaleingang angeschlossenen Sensoren zu realisieren, ist vorgesehen, dass die an einem Signaleingang angeschlossenen Sensoren zur gleichen Zeit jeweils einen Signalimpuls aussenden.

Eine einfache Ausgestaltung der Sensoren lässt sich dadurch erreichen, dass die Sensoren als Ultraschallsensoren ausgebildet sind.

Weitere Einzelheiten der Erfindung sind der Beispielsbeschreibung und den Zeichnungen zu entnehmen. Hierbei zeigen
- Fig. 1: das elektronische Überwachungs- und/oder Einstellsystem für ein Verteilergestänge bei der Abstandsmessung in einem gleichmäßig hohem Bestand über die gesamte Arbeitsbreite, in schematischer Darstellung
- Fig. 2: das elektronische Überwachungs- und/oder Einstellsystem für ein Verteilergestänge bei der Abstandsmessung in einem gleichmäßig hohem Bestand über die gesamte Arbeitsbreite, wobei im Bereich eines Sensors kein Pflanzenbestand gegenüber den übrigen Feldbereichen vorhanden ist, in schematischer Prinzipdarstellung und
- Fig. 3: die Aussendung und der Empfang mit Auswertung der von dem Sensor ausgesandten und empfangenen Signale, dargestellt in einem Diagramm in schematischer Prinzipdarstellung.

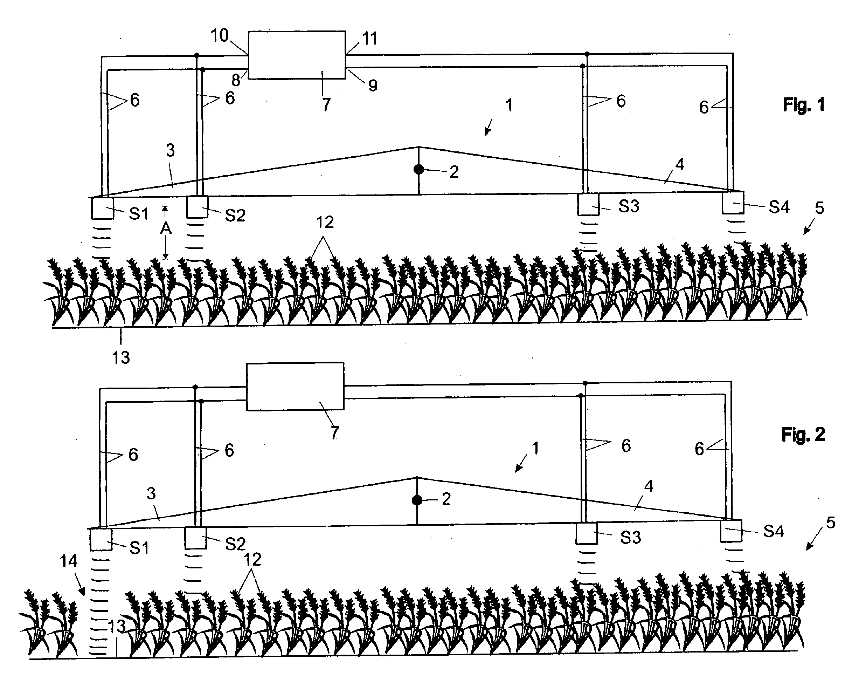

Das in den Fig. 1 und 2 in Prinzipdarstellung vereinfacht dargestellte Verteilergestänge 1 ist mittels einer nicht dargestellten Aufhängevorrichtung, um die angedeutete Schwenkachse 2, die in Fahrtrichtung verläuft, schwenkbar angeordnet. Das Verteilergestänge 1 ist über nicht dargestellte Verbindungsmittel in Höhenrichtung verstellbar an dem Rahmen einer Verteilmaschine, beispielsweise einer Feldspritze angeordnet. Das Verteilergestänge 1 erstreckt sich quer zur Fahrtrichtung und weist eine Breite auf, die ein Vielfaches seiner Transportbreite und/oder der Transportbreite der Verteilmaschine ist. Zwischen dem Verteilergestänge 1 und dem Tragrahmen, an dem das Verteilergestänge 1 angeordnet sind, sind Einstellelemente angeordnet, so dass Verteilergestänge 1 um die in Fahrtrichtung verlaufende Schwenkachse 2 ein- und/oder verstellbar angeordnet ist.

Auf jeder Seite 3 und 4 des Verteilergestänges 1 sind jeweils zwei beabstandet zueinander angeordnete Sensoren S1, S2, S3, S4 zur Messung des Abstandes A des Verteilergestänges 1 zur Bestandsfläche 5 angeordnet. Die Sensoren S1, S2, S3, S4 sind über als Leitungen 6 ausgebildete Datenübertragungseinrichtungen mit einem elektronischen Auswerterechner 7, beispielsweise einen Bordcomputer verbunden. Die Sensoren S1, S2, S3, S4 übermitteln über Datenübertragungseinrichtung 6 Signaldaten über den Abstand A zur Bestandsfläche 5 an den elektronischen Auswerterechner 7. Die Sensoren S1, S2, S3, S4 sind als Ultraschallsensoren ausgebildet. An jedem Signaleingang 8, 9 des Auswerterechners 7 sind, wie die Fig. 1 und 2 zeigen, zwei Sensoren S1, S2, S3, S4 angeordnet. Des weiteren sind die an einem Signaleingang 8, 9 angeschlossenen Sensoren S1, S2, S3, S4 ebenfalls an einem gemeinsamen Signalausgang 10, 11 des elektronischen Auswerterechners 7 angeschlossen.

An dem Signaleingang 8 sowie dem Signalausgang 10 sind die Sensoren S1 und S2, während an dem Signaleingang 9 sowie dem Signalausgang 11 die Sensoren S3 und S4 angeschlossen sind.

Die jeweils an einem Signaleingang 8, 9 angeschlossenen Sensoren S1, S2, S3, S4 werden von dem Auswerterechner 7 derart angesteuert, dass sie zur gleichen Zeit jeweils gleichzeitig einen Signalimpuls 11, 12 aussenden.

Diese Signalimpulse I1 und I2 werden beim Auftreffen auf die Pflanzen 12 der Bestandsfläche 5 reflektiert. Die reflektierten Signale E1, E2, E1A, E2A, E1B, E2B, E1C, E2C werden von dem Empfängerbereich der Sensoren S1, S2, S3, S4 empfangen und an den Auswerterechner 7 übermittelt.

Der Auswerterechner 7 weist Filtermittel auf, so dass nur Signaldaten E1, E2 kürzester Laufzeit der an einem Signaleingang 8, 9 angeschlossenen Sensoren S1, S2, S3, S4 für die Auswertung zur Ermittlung des Abstandes A zur Bestandsfläche 5 berücksichtigt werden.

Die Funktionsweise der elektronischen Überwachungs- und Einstellsystem für die Höhe und Lageneinstellung eines sich quer zur Fahrtrichtung erstreckendem Verteilergestänges 1 ist folgende:

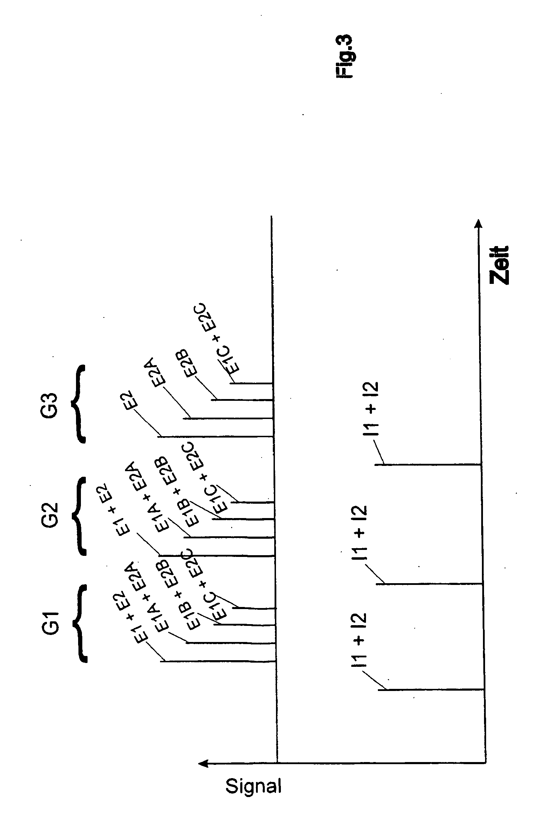

In der Fig. 3 ist lediglich die Signalaussendung und der Signalempfang für die auf der linken Seite angeordneten Sensoren S1 und S2 dargstellt. Die Signalaussendung und der Signalempfang der auf der rechten Seite des Verteilergestänges angeordneten Sensoren S3 und S4 entspricht denen der Sensoren S1 und S2, entsprechend der nachfolgenden Beschreibung.

Die Sensoren S1 und S2 senden, wie in Fig. 3 dargestellt ist, in zeitlichen Abständen, jedoch gleichzeitig, gesteuert von dem Auswerterechner 7, den Signalimpuls I1 und I2 aus. Wenn die Signalimpulse I1 und I2 auf Pflanzenteilen oder den Boden auftreffen werden Signale E, wobei anschließend die Signale E1-E2.C. erläutert werden reflektiert und von den Sensoren S1 und S2 empfangen, wie in Fig. 3 dargstellt ist. Der Empfang des ersten Signals, dargstellt durch die Empfanggruppe E zeigt das Signal E1 und E2, der Bestandsflächensituation gemäß Fig. 1. Als erstes werden in diesem Fall das Signal E1 und E2 von den Sensoren S1 und S2 empfangen, die auf die obersten Pflanzenteile der Bestandsfläche 5 aufgetroffen und von diesen reflektiert worden sind. Die Signale E1 und E2 repräsentieren also den Abstand A des Verteilergestänges bzw. Sensoren S1 und S2 zu der Bestandsoberfläche 5. Nach einer kurzen Zeitdauer werden die Signale E1A und E2A von den Sensoren S1 und S2 empfangen, dies sind die Signale, die von den etwas tiefer liegenden Pflanzenteilen unterhalb der Bestandsoberfläche des Bestandes 5 reflektiert und von den Sensoren S1 und S2 empfangen werden. Die Signale E1B und E2B sind die Signale, die auf weiter tiefer liegenden Pflanzenteile, beispielsweise Blätter der Pflanzen aufgetroffen sind, und von diesen reflektiert und von den Sensoren S1 und S2 empfangen werden. Bei den Signalen E1C und E2C handelt es sich um die Signale, die von der Bodenoberfläche, d.h. das die Signale den gesamten Bestand zwischen den Pflanzen 12 bis zum Boden 13 durchdrungen haben, vom Boden 13 reflektiert und von den Sensoren S1 und S2 empfangen worden sind.

Von dem Auswerterechner 7 werden für die Berechnung des Abstandes A des Verteilergestänges 1 bzw. Sensoren S1 und S2 zu der Bestandfläche 5 aus der Signalgruppe G1 der Signale E1-E2C lediglich das Signal der kürzesten Laufzeit, nämlich das Signal E1 oder E2 berücksichtigt, da der Auswerterechner 7 Filtermittel aufweist, dass nur die Signalzeiten kürzester Laufzeit der an einem Signaleingang 8 angeschlossenen Sensoren für die Auswertung zur Ermittlung des Abstandes A zur Bestandsfläche 5 berücksichtigt werden.

Wie Fig. 3 zeigt wird nach einer gewissen Zeitdauer ein weiteres Signal I1 bzw. I2 von den Sensoren S1 bzw. S2, gesteuert von dem Auswerterechner 7 oder einer entsprechenden Steuerungseinrichtung der Sensoren S1 oder S2, ausgesandt. Diese von den ausgesandten Signalimpulsen reflektierten Empfangssignale E1 bis E2C der Signalgruppe G2 werden ebenfalls wie vorbeschrieben ausgewertet.

Bei den dritten Signalimpuls I bzw. I2 die von den Sensoren S1 und S2 ausgesendet werden und bei der anschließend empfangenen Signalgruppe GB ist die Situation gemäß Fig. 2 dargstellt. Bei der Situation gemäß Fig. 2 befindet sich der Sensor S1 oberhalb eines Bestandsbereiches 14, indem sich eine Bestandslücke befindet, d.h. in einem Bereich in dem sich keine Pflanzen 12, wie beispielsweise in Fi. 2 dargestellt, befinden oder sich Lagegetreide, etc. befindet und somit keine repräsentative Abstandsermittlung für die gesamte Bestandsfläche 5 durch den Sensor S1 möglich ist. In diesem Falle werden die von dem Sensor E2 ausgesendeten Signal I2 zuerst reflektiert und als Empfangssignal E2 von den Sensor S2 empfangen. Weiterhin empfängt der Sensor S2 die Signale E2A und E2B nach jeweils fortschreitender Zeit. Als erstes Signal empfängt der Sender S1 dann das Signal E1C, gleichzeitig mit dem Signal E2C. Dies sind Signale, die von der Bodenoberfläche 13 reflektiert werden. Um hier jedoch jetzt auch für die linke Seite des Verteilergestänges 1 durch die Sensoren S1 und S2 die richtige Abstandsfläche A zu ermitteln berücksichtigt der Auswerterechner 7 bzw. die Filtermittel seines entsprechenden Programms nur die Signaldaten kürzester Laufzeit, d.h., dass für die Ermittlung in dem Fall, wie in Fig. 2 dargstellt wird nur das Signal E2, welches der Sender S2 empfangen hat und nicht das erste wesentlich später empfangene Signal E1C des Senders S1 berücksichtigt wird.

Dies wird ganz einfach letztendlich dadurch verwirklicht, dass an dem Signaleingang 8 gleichzeitig zwei Sensoren S1, S2 angeschlossen sind und somit der Auswerterechner 7 nicht unterscheiden kann, von welchem der Sensoren S1 und S2, die an ihm angeschlossen sind das jeweilige reflektierte Signal E1 bis E2C kommt. Für den Signaleingang 9 mit den Sensoren S3 und S4 gilt entsprechendes.

## Patentansprüche

1. Elektronisches Überwachungs- und Einstellsystem für die Höhen- und/oder Lageeinstellung eines sich quer zur Fahrtrichtung erstreckenden Verteilergestänges, welches eine Breite aufweist, die ein Vielfaches seiner Transportbreite und/oder der Transportbreite einer Verteilmaschine ist, in Höhenrichtung und um zumindest eine in Fahrtrichtung verlaufende Achse, die sich im mittleren Bereich des Verteilergestänges befindet, mittels Einstellelementen ein- und/oder verstellbar an einem Tragrahmen angeordnet ist, wobei auf jeder Seite des Verteilergestänges jeweils zumindest zwei beabstandet zueinander angeordneten, nach dem Laufzeitprinzip arbeitenden Sensoren zur Messung des Abstandes des Verteilergestänges zur Bestandsfläche angeordnet sind, wobei die Sensoren über Datenübertragungseinrichtungen Signaldaten über den Abstand zur Bestandsfläche an die Signaleingänge eines elektronischen Auswerterechners übermitteln, **dadurch gekennzeichnet, dass** jedem Signaleingang (8, 9) zumindest zwei Sensoren S1, S2, S3, S4, die Signaldaten E1, E2, E1A, E1B, E2A, E2B, E1C, E2C an den Auswerterechner (7) übermitteln, auf einer Seite (3, 4) des Verteilergestänges (1) angeordnet sind, dass der Auswerterechner (7) Filtermittel aufweist, so dass nur die Signaldaten E1, E2 kürzester Laufzeit der an einem Signaleingang (8, 9) angeschlossenen Sensoren S1, S2, S3, S4 für die Auswertung zur Ermittlung des Abstandes A zur Bestandsfläche 5 berücksichtigt werden.

2. Elektronisches Überwachungs- und Einstellsystem nach Anspruch 1, **dadurch gekennzeichnet, dass** die an einem Signaleingang (8, 9) angeschlossenen Sensoren S1, S2, S3, S4 ebenfalls an einem Signalausgang (10, 11) des elektronischen Auswerterechners (7) angeschlossen sind.

3. Elektronisches Überwachungs- und Einstellsystem nach einem oder mehreren der vorstehenden Ansprüche, **dadurch gekennzeichnet, dass** die an einem Signaleingang (8, 9) angeschlossenen Sensoren A1, S2, S3, S4 zur gleichen Zeit jeweils einen Signalimpuls I1, I2 aussenden.

4. Elektronisches Überwachungs- und Einstellsystem nach einem oder mehreren der vorstehenden Ansprüche, **dadurch gekennzeichnet, dass** die Sensoren S1, S2, S3, S4 als Ultraschallsensoren ausgebildet sind.

## Claims

1. Electronic monitoring and adjustment system for adjusting the height and/or position of a distributor rod which extends transversely to the direction of travel, has a width which is a multiple of its transport width and/or the transport width of a distribution machine, and is arranged on a supporting frame in such a manner that it is adjustable in the vertical direction and about at least one axis, which runs in the direction of travel and is located in the central region of the distributor rod, using adjusting elements, at least two sensors which are arranged at a distance from one another, operate according to the delay-time principle and are intended to measure the distance between the distributor rod and the crop surface respectively being arranged on each side of the distributor rod, the sensors transmitting signal data relating to the distance to the crop surface to the signal inputs of an electronic evaluation computer via data transmission devices, **characterized in that** at least two sensors S1, S2, S3, S4 which transmit signal data E1, E2, E1A, E1B, E2A, E2B, E1C, E2C to the evaluation computer (7) are arranged at each signal input (8, 9) on one side (3, 4) of the distributor rod (1), and **in that** the evaluation computer (7) has filter means, with the result that only the signal data E1, E2 with the shortest delay time from the sensors S1, S2, S3, S4 connected to a signal input (8, 9) are taken into account for the evaluation in order to determine the distance A to the crop surface 5.

2. Electronic monitoring and adjustment system according to Claim 1, **characterized in that** the sensors S1, S2, S3, S4 which are connected to a signal input (8, 9) are likewise connected to a signal output (10, 11) of the electronic evaluation computer (7).

3. Electronic monitoring and adjustment system according to one or more of the preceding claims, **characterized in that** the sensors S1, S2, S3, S4 which are connected to a signal input (8, 9) each emit a signal pulse I1, I2 at the same time.

4. Electronic monitoring and adjustment system according to one or more of the preceding claims, **characterized in that** the sensors S1, S2, S3, S4 are in the form of ultrasonic sensors.

## Revendications

1. Système électronique de surveillance et de réglage pour le réglage en hauteur et/ou en position d'une structure de distributeur s'étendant transversalement à la direction de déplacement, ayant une largeur correspondant à un multiple de sa largeur en position de transport et/ou de la largeur en position de transport d'une machine distributrice, pour le réglage en hauteur et au moins autour d'un axe dirigé dans la direction de déplacement, et situé dans la zone centrale du châssis de distributeur, par des éléments de réglage et/ou d'actionnement sur un châssis de support,
* de chaque côté de la structure de distributeur, il y a chaque fois au moins deux capteurs écartés l'un de l'autre et fonctionnant selon le principe du temps de parcours pour mesurer la distance entre la structure de distributeur et la surface de la plantation,
* les capteurs transmettant par des installations de transmission de données, les signaux de données concernant la distance par rapport à la surface de plantation, aux entrées de signaux d'un dispositif d'exploitation électronique,
système **caractérisé en ce que**
- au moins deux capteurs (S1, S2, S3, S4) transmettent les données de signaux (E1, E2, E1A, E1B, E2A, E2B, E1C, E2C) à chaque entrée de signal (8, 9) pour le calculateur d'exploitation (7), ces capteurs étant prévus sur un côté (3, 4) de la structure de distributeur (1),
- le calculateur d'exploitation (7) comporte des filtres pour ne tenir compte pour l'exploitation que des données de signaux (E1, E2) ayant le temps de parcours le plus court pour les capteurs (S1, S2, S3, S4) raccordés à une entrée de signal (8, 9) pour l'exploitation servant à déterminer la distance (A) par rapport à la surface de plantation (5).

2. Système électronique de surveillance et de réglage selon la revendication 1,
**caractérisé en ce que**
les capteurs (S1, S2, S3, S4) raccordés à une entrée de signal (8, 9) sont également raccordés à une sortie de signal (10, 11) du calculateur d'exploitation électronique (7).

3. Système électronique de surveillance et de réglage selon l'une ou plusieurs des revendications précédentes,
**caractérisé en ce que**
les capteurs (S1, S2, S3, S4) relies à une entrée de signal (8, 9) émettent en même temps chaque fois un signal impulsionnel (I1, I2).

4. Système électronique de surveillance et de réglage selon l'une ou plusieurs des revendications précédentes,
**caractérisé en ce que**
les capteurs (S1, S2, S3, S4) sont des capteurs à ultrasons.
